Europäisches Patentamt

**European Patent Office**

**Office européen des brevets**

(19)

(11) Numéro de publication : **0 010 199**

**B1**

(12)

# FASCICULE DE BREVET EUROPÉEN

(45) Date de publication du fascicule du brevet :
13.07.83

(51) Int. Cl.³ : **G 06 K 15/02**, B 41 J 19/18

(21) Numéro de dépôt : **79103617.1**

(22) Date de dépôt : **24.09.79**

(54) **Système de commande d'échappement pour imprimante.**

(30) Priorité : **24.10.78 US 954374**

(43) Date de publication de la demande :
**30.04.80 Bulletin 80/09**

(45) Mention de la délivrance du brevet :
**13.07.83 Bulletin 83/28**

(84) Etats contractants désignés :
**BE CH DE FR GB NL SE**

(56) Documents cités :
**EP A 0 009 291
US A 3 723 842
US A 3 742 326
US A 3 942 619**

(73) Titulaire : **International Business Machines Corporation**
**Old Orchard Road**
**Armonk, N.Y. 10504 (US)**

(72) Inventeur : **Morgan, David Benjamin**
**700 Hambrick Ave**
**Lexington Kentucky 40508 (US)**
Inventeur : **Pan, Robert Fung-Chen**
**314 Sierra Dr.**
**Lexington Kentucky 40505 (US)**
Inventeur : **Quinn Jr., Paul Aloysius**
**3123 Roxburg Dr.**
**Lexington Kentucky 40503 (US)**
Inventeur : **Westerman, Glenn Stewart**
**5621 Sulphur Road**
**Lexington Kentucky 40511 (US)**

(74) Mandataire : **Vekemans, André**
**COMPAGNIE IBM FRANCE Département de Propriété**
**Industrielle**
**F-06610 La Gaude (FR)**

EP 0 010 199 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# 0 010 199

## Système de commande d'échappement pour imprimante

### Description

La présente invention concerne un système de commande d'échappement pour imprimante et plus particulièrement, un système de commande d'excitation pour imprimante comprenant un moteur à courant continu à commande de vitesse entièrement numérique, utilisant des signaux modulés par largeur des impulsions pour assurer la commande directe de la vitesse de rotation du moteur.

### Etat de la technique

On connaît de nombreux systèmes pour commander la vitesse du mouvement relatif entre les éléments d'impression d'une imprimante et le milieu de réception de l'impression. Dans la présente description, on considère que les machines à écrire sont des imprimantes interactives. Dans tous ces systèmes, il est nécessaire que la vitesse du mouvement relatif entre les éléments d'impression et le milieu d'impression soit commandée avec précision pour que l'impression se déroule sur le milieu d'impression au point précis désiré. Dans certains systèmes comme, par exemple, une machine à écrire simple, les positions du chariot pour les diverses opérations d'impression peuvent être plus facilement déterminées par l'intermédiaire d'une roue de codage montée sur un arbre fixé à l'arbre d'entraînement du moteur. Dans d'autres systèmes, tels qu'une imprimante à jet d'encre ou une imprimante à jet d'encre interactive, le système de commande est, par nécessité, plus complexe. Par exemple, dans une imprimante du type à jet d'encre, avant que l'opération d'impression puisse se dérouler, il est souhaitable que le chariot associé au dispositif de projection d'encre atteigne une vitesse prédéterminée avant l'application du début de balayage (début d'impression). dans d'autres systèmes, la commande de l'impression et l'apparition de l'impression sur le milieu d'impression sont améliorées lorsque le système d'entraînement est maintenu aussi proche que possible et en corrélation avec l'excitation réelle de l'imprimante et l'impression exécutée par celle-ci.

Dans les systèmes de l'art antérieur, les dispositifs de commande du moteur utilisent généralement un tachymètre qui est entraîné par le moteur et peut délivrer un signal analogique pouvant être utilisé dans un circuit de réaction pour maintenir le moteur à une vitesse constante. Il est également possible que le dispositif de commande de la vitesse du moteur utilise une roue de codage générant des impulsions qui sont appliquées à un convertisseur numérique-analogique appliquant la tension analogique obtenue au circuit d'excitation du moteur pour l'accélérer ou le ralentir. Des systèmes classiques de commande de moteur de l'art antérieur sont décrits dans les brevets suivants :

1. Le brevet des E.U.A. n° 3 539 895 décrit un système qui utilise un résolveur de la position et non une unité de codage numérique pour la détection, une unité de commande analogique et non une unité de commande de commutation pour le moteur, et qui constitue plutôt une unité de commande de position et non de vitesse.

2. Le brevet des E.U.A. n° 3 416 052 décrit un système qui comporte un circuit de commande de position utilisant des signaux modulés par largeur d'impulsion (PWM), c'est-à-dire qu'il s'agit fondamentalement d'un circuit PWM analogique qui utilise une réaction de commande positive, et plutôt une unité de commande d'un solénoïde et non de vitesse.

3. Le brevet des E.U.A. n° 3 723 842 décrit une unité de servo commande numérique de moteur comportant un circuit de détermination de taux d'erreur, un système de commande de données « d'échantillonnage », un agencement en série d'un système de commande numérique classique à l'exception du fait que la sortie ne détermine que le signe du dépassement. Le dispositif présenté dans ce brevet utilise une unité de commande de position et non de vitesse. L'unité de codage de position est à 16 phases et non à phase unique. La sortie de commande n'est pas décrite mais est probablement du type analogique pour une commande du type « marche-arrêt ».

4. Le brevet des E.U.A. n° 4 006 391 décrit un modulateur de largeur des impulsions linéarisé qui est utilisé pour la commutation d'un moteur à courant alternatif biphasé et non un moteur à courant continu.

5. Le brevet des E.U.A. n° 3 742 326 concerne un servo mécanisme numérique qui utilise des informations numériques pour obtenir un signal modulé par largeur des impulsions pour la commande d'un servo moteur à courant alternatif biphasé, et non d'un servo moteur à courant continu et l'unité de commande de vitesse est différente en raison du type de commande qui est appliqué au moteur à courant alternatif.

6. Le document EP-A-9 291 concerne un système de commande du déplacement du chariot d'une imprimante dans lequel un processeur est utilisé pour calculer la vitesse par la fonction $\Delta X/\Delta t$.

### Exposé de l'invention

La présente invention a pour but d'apporter un remède à la complexité des systèmes de l'art antérieur. Elle est constituée par un système de commande de la vitesse pour imprimante comportant un chariot sur lequel sont disposés des éléments permettant l'impression de caractères sur un milieu de réception d'impression et assurant un mouvement relatif entre ledit chariot et ledit milieu de réception d'impression, un moteur couplé soit audit chariot, soit audit milieu de réception d'impression, soit aux deux, pour assurer ledit mouvement relatif, un moyen générant une série d'impulsions adjacentes séparées par un intervalle de temps inversement proportionnel à la vitesse dudit mouvement relatif, un moyen comparant l'intervalle de temps entre impulsions adjacentes à un intervalle de temps prédéterminé fonction de la vitesse désirée et générant un premier signal de sortie numérique représentant la différence entre l'intervalle de temps réel entre impulsions adjacentes et ledit intervalle de temps prédéterminé, et un moyen de génération à partir du premier signal de sortie numérique, d'une tension appliquée audit moteur pour obtenir la vitesse désirée du mouvement relatif. Les revendications 2 à 8 définissent des modes particuliers de réalisation de l'invention.

D'après ce qui précède, on voit que l'objet principal de la présente invention est de commander avec précision la vitesse de rotation du moteur d'une imprimante à l'aide de circuits numériques. Le système décrit dans la revendication 2 permet la conversion directe d'un signal numérique en un signal impulsionnel modulé en largeur pour la commande d'un moteur à courant continu.

Ainsi le moteur pourra atteindre rapidement la vitesse optimale désirée avec une oscillation minimale de part et d'autre de la vitesse prédéterminée du moteur, tout en permettant une commande simple mais efficace du changement de la vitesse de l'imprimante ou du mouvement du chariot.

La présente invention peut être utilisée dans divers types d'imprimantes y compris dans les imprimantes interactives.

## Enoncé des Figures

La figure 1 est une représentation schématique d'un exemple d'imprimante comprenant un système de commande d'échappement représenté sous la forme de schéma blocs et réalisé selon les enseignements de la présente invention.

La figure 2 est une représentation graphique de la valeur réelle de la tension appliquée au moteur en fonction de la valeur approchée de celle-ci, servant de base pour la mise en œuvre du système de commande d'échappement de la présente invention.

La figure 3 est une représentation sous la forme de schéma blocs du système de commande de la présente invention et présente les divers signaux sous forme mnémonique.

La figure 4 est un diagramme (représentation logique séquentielle) des états d'une unité de commande de séquences illustrant les équations logiques utilisées pour la construction d'une unité de commande de séquences A illustrée à la figure 3.

Les figures 5 à 8 représentent les circuits logiques réels utilisés dans l'unité de commande de séquences A.

La figure 9 est une représentation schématique de la bascule d'entrée d'échappement B illustrée à la figure 3.

Les figures 10 et 11 sont des diagrammes illustrant les circuits utilisés pour former le compteur C de la figure 3.

La figure 12 est une représentation schématique des circuits utilisés pour former le registre D de la figure 3.

La figure 13 est une représentation schématique du comparateur E de la figure 3.

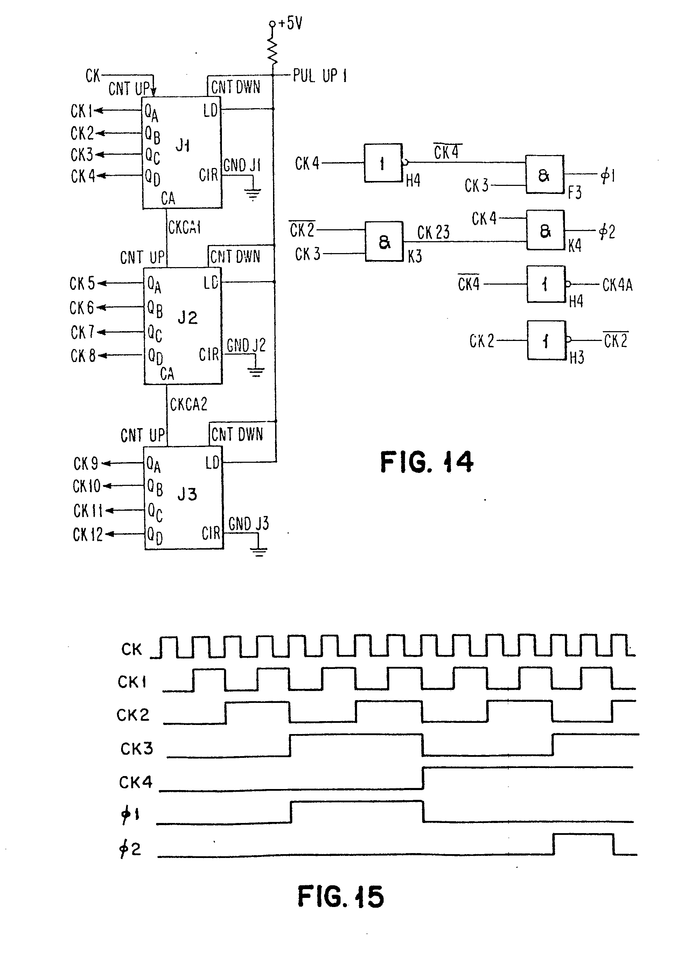

La figure 14 est une représentation schématique des circuits formant le compteur F de la figure 3.

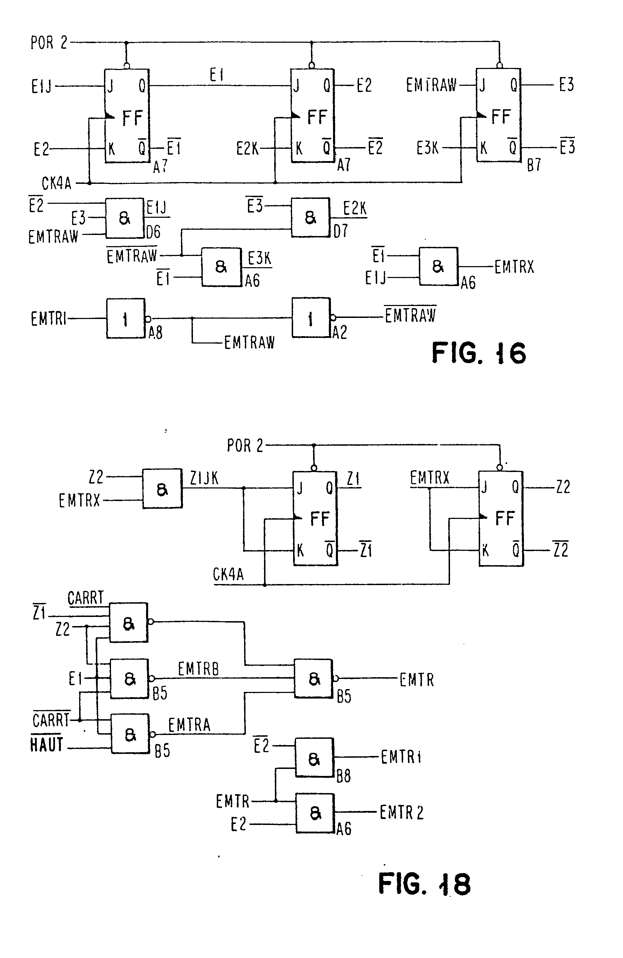

La figure 15 est un diagramme chronologique des sorties du compteur F représenté à la figure 14 et schématiquement à la figure 3.

La figure 16 est une représentation schématique des circuits de l'interface d'unité de codage G de la figure 3.

La figure 17 est la représentation logique séquentielle des états de l'interface d'unité de codage G.

La figure 18 est une représentation schématique des circuits de la logique de division par N du type H de la figure 3.

La figure 19 est une représentation logique séquentielle des états de la logique de division par N de la Figure 18.

Les figures 20 à 22 sont des schémas chronologiques de l'interface de l'unité de codage G et de la logique de division par N illustrant, à titre d'exemple, trois vitesses possibles.

La figure 23 est une représentation schématique de la logique I de l'interface d'unité de commande de la figure 3.

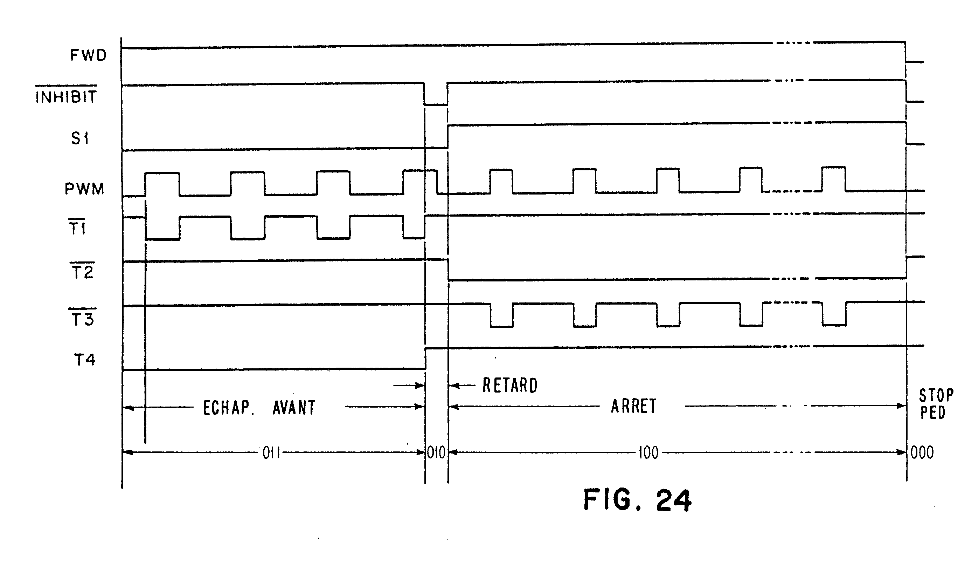

La figure 24 est une représentation chronologique de la logique d'interface d'unité de commande I.

La figure 25 est une représentation schématique du circuit d'excitation qui reçoit la sortie de l'interface d'unité de commande I pour commander le moteur de la figure I.

## Description d'un mode de réalisation de l'invention

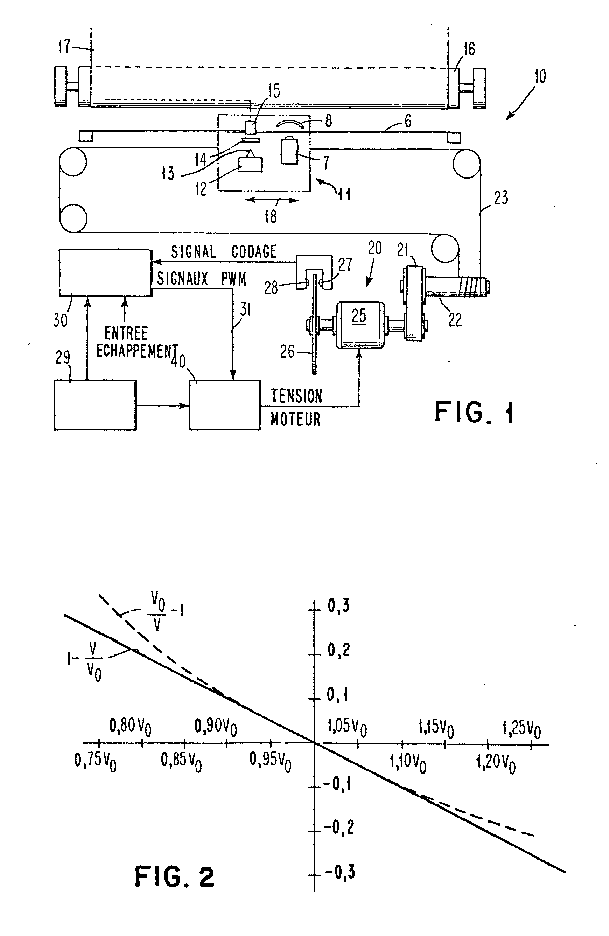

La figure 1 représente une imprimante classique 10 du type à la volée telle qu'une imprimante à jet d'encre utilisant le système dit de « SWEET » bien connu et décrit dans le brevet des E.U.A. n° 3 596 275. Mais il est évident que le système de commande d'échappement d'imprimante de la présente invention

3

peut être utilisé avec de nombreuses imprimantes du type à impact et du type sans impact et indépendamment du fait qu'elles soient interactives ou non. Comme on le voit sur la figure, l'imprimante 10 comprend un chariot ou élément similaire 11 sur lequel sont montés les éléments d'impression 12 qui comprennent par exemple une buse 13 qui émet un jet d'encre qui, en raison des perturbations de pression rencontrées, est divisé en gouttelettes qui traversent une électrode de charge ou autre dispositif similaire 14, puis passent entre des électrodes de déviation 15 pour frapper le milieu de réception d'impression constitué ici par le papier 17 disposé sur la platine 16. Des moyens sont prévus pour assurer le mouvement relatif entre le chariot et le milieu de réception d'impression ; dans le cas présent le chariot est mobile dans les sens indiqués par la double flèche 18 sous la sollicitation du moyen d'entraînement 20. Le moyen d'entraînement comprend de préférence un moteur à courant continu ou autre dispositif similaire 25 qui peut être raccordé par n'importe quel moyen approprié au chariot 11 pour assurer le mouvement de celui-ci par rapport au moyen de réception d'impression. Dans le cas de la figure 1, le moteur à courant continu est raccordé par une courroie crantée ou autre élément similaire 21 à un tambour d'enroulement de câble 22 portant plusieurs tours d'un câble raccordé à ses deux extrémités aux côtés opposés du chariot 11 de façon que la rotation du moteur, suivant son sens, assure le mouvement du chariot dans les deux sens indiqués par la double flèche 18. Dans l'imprimante de la figure 1, il est indispensable, pour assurer une position correcte du chariot par rapport au début de l'impression ainsi qu'un mouvement de celui-ci dans le sens approprié par rapport au milieu de réception d'impression ou papier 17, qu'un moyen soit prévu pour localiser ledit chariot à tout instant pendant son mouvement indiqué par la double flèche 18. Dans ce but, un réseau ou autre élément similaire 6 peut être utilisé en association avec le module d'émission et de détection de lumière 7 comprenant un miroir 8, pour avoir à la fois une indication de la position du chariot 11 et une indication du sens de son délacement. Un tel système complet est décrit dans EP-A-6 441 et EP-A-6 482.

Si le moteur du système d'entraînement 20 est directement raccordé au chariot 11 pour assurer son mouvement et permettre la lecture d'une information de vitesse résultant du passage du détecteur 7 devant le réseau 6, on peut utiliser un seul moyen de détection. Cependant, un tel système d'entraînement direct présente toujours des problèmes relatifs à l'inertie du chariot, et lorsque le moteur est séparé du chariot par un système de transmission similaire à celui présenté ici, un système de.codage séparé doit être utilisé pour obtenir l'information nécessaire à renvoyer au moteur 25 pour permettre, en association avec les informations de positions et de sens obtenues à partir du réseau 6, une commande précise de la vitesse du moteur qui détermine naturellement la vitesse du chariot 11.

Lorsque l'on étudie un système de commande de vitesse pour une machine à écrire ou imprimante à la volée bon marché, un bon contrôle de la vitesse autour d'une vitesse de fonctionnement donnée et un prix de revient peu élevé deviennent les deux objectifs principaux. Pour concevoir une machine bon marché permettant un bon contrôle de la vitesse de fonctionnement, il est nécessaire de prévoir un système de commande à boucle de contre-réaction en vitesse pour atteindre le premier objectif et un système de détection, de commande et d'entraînement numérique simple pour atteindre le deuxième objectif. Ainsi, un bon échappement de machine à écrire est assuré fondamentalement par un bon système de commande.

Un système de commande conçu selon les enseignements de la présente invention assure trois fonctions principales : (1) il détermine la vitesse du moteur, (2) il détermine la tension appliquée au moteur qui est requise pour obtenir la vitesse du moteur désirée et (3) il génère le signal de commande de la tension appliquée au moteur, dans le cas présent, un signal de commande à modulation de la largeur des impulsions (PWM).

Dans un système classique, la vitesse du moteur peut être déterminée en utilisant une roue de codage telle que la roue 26 de la figure 1 qui présente plusieurs fentes à sa périphérie, la partie de la roue comportant des fentes passant entre une unité de codage telle qu'une diode ou un transistor électroluminescent 27 et un ensemble phototransistor amplificateur 28 pour qu'une impulsion soit émise par le phototransistor lors du passage d'une fente entre le transistor électroluminescent et le phototransistor, passage dû à la rotation du moteur et donc de la roue de codage 26.

La vitesse du moteur peut être trouvée en notant tout d'abord le temps $\Delta t$ s'écoulant entre les impulsions de l'unité de codage. La distance $\Delta x$ séparant des fentes adjacentes de la roue de codage qui sont représentées par les impulsions délivrées par l'unité de codage, est naturellement celle établie lors de la conception de la roue de codage 26. De cette manière, la vitesse du moteur peut être déterminée par l'équation suivante $V = \Delta x/\Delta t$. D'une manière classique, la fonction $\Delta x/\Delta t$ peut être calculée par un processeur si la cadence des impulsions est suffisamment lente ou par une logique combinatoire. Dans le cas où un processeur est utilisé, le calcul est difficile et relativement lent. Si la fonction $\Delta x/\Delta t$ est calculée par logique combinatoire, une fonction logique combinatoire importante est requise. (La mise en œuvre d'un $1/\Delta t$ en logique combinatoire requiert des circuits logiques complexes et nombreux).

Après la mesure de la vitesse du moteur, on calcule la tension qui doit être appliquée au moteur pour obtenir la vitesse désirée. Dans le système qui est choisi en raison de sa stabilité et de sa simplicité, la tension appliquée au moteur est directement proportionnelle à la différence entre la vitesse du moteur et la vitesse désirée. Cette fonction est donnée par l'équation suivante :

$$EM = K (V_0 - V) + Emb \qquad (1)$$

4

ou

$$EM = KV_0 (1 - V/V_0)$$

où

EM = tension appliquée au moteur,
K = constante,
$V_0$ = vitesse désirée,
V = vitesse actuelle
Emb = tension de polarisation (il est évident que lorsque $V_0$ = V, EM sera égal à 0 et que si aucune tension de polarisation n'est appliquée, le moteur s'arrêtera. En conséquence, on a négligé Emb dans les équations suivantes).

Le système de commande de la présente invention se concentre sur les parties suivantes : (1) la mise en œuvre de la fonction EM = K($V_0$ − V) avec une logique simple et (2) la génération d'un signal de commande à modulation de la largeur des impulsions à partir de la valeur de la tension appliquée au moteur (EM) par une fonction logique simple sans utilisation de circuits analogiques.

Etant donné que, comme on l'a déjà expliqué, la mise en œuvre du système par le calcul de V = Δx/Δt est difficile, le problème posé par la mise en œuvre de la fonction EM = K($V_0$ − V) est résolu par l'utilisation d'une approximation non linéaire autour du point de fonctionnement de $V_0$. En utilisant une approximation non linéaire, la mise en œuvre de celle-ci simplifie grandement la logique nécessaire à la création du système de commande. L'approximation est la suivante :

$$EM' = (\Delta t - \Delta t_0) \qquad (2)$$

où

EM' = Tension appliquée au moteur
K' = Constante
Δt = Temps s'écoulant entre les impulsions (réelles) de l'unité de codage.
$\Delta t_0$ = Temps s'écoulant entre les impulsions (désirées) de l'unité de codage.
Δx = Distance séparant des fentes adjacentes de la roue de codage.
Preuve de la validité de l'approximation :
Etant donné que $V_0 = \Delta x/\Delta t_0$ et que V = Δx/Δt, on a alors :

$$EM' = K' (\Delta x/V - \Delta x/V_0) \qquad (3)$$
$$EM' = K' (\Delta x/V_0) [\Delta x/V \cdot V_0/\Delta x - \Delta x/V_0 \cdot V_0/\Delta x]$$
$$EM' = K' (\Delta x/V_0) [V_0/V - 1]$$

et étant donné que $\Delta x/V_0 = \Delta t_0$ on a alors :

$$EM' = K' \Delta t_0 (V_0/V - 1)$$

Ainsi, lorsque $V_0$ = V, EM = EM' on établit $K \cdot V_0 = K' \Delta t_0$, ce qui assure une bonne approximation pour EM' = EM. La représentation graphique de la figure 2 montre le rapport de l'approximation, c'est-à-dire $V_0/V$ − 1 approchant EM' et $1 - V/V_0$ = EM.

Ainsi l'approximation de K' (Δt − $\Delta t_0$) peut être considéré comme une approximation valable de K ($V_0$ − V).

En utilisant l'approximation et selon les enseignements de la présente invention, on voit qu'une fonction logique très simple permet de comparer le temps réel entre les impulsions de l'unité de codage au temps désiré puis l'utilisation de la différence pour créer un signal modulé par largeur d'impulsion qui sera appliqué au circuit de commande pour contrôler la tension appliquée au moteur et donc, sa vitesse. Comme on le voit à la figure 1, le signal de l'unité de codage est appliqué à la logique du système de commande 30 qui est alimenté d'une manière appropriée par une alimentation 29, et le signal sortant du système de commande consiste en un signal modulé par largeur d'impulsion (PWM) appliqué par la ligne de sortie 31 au système électronique de commande 40. La mise en œuvre de l'équation d'approximation et la conversion en un signal PWM sont donc des opérations simples.

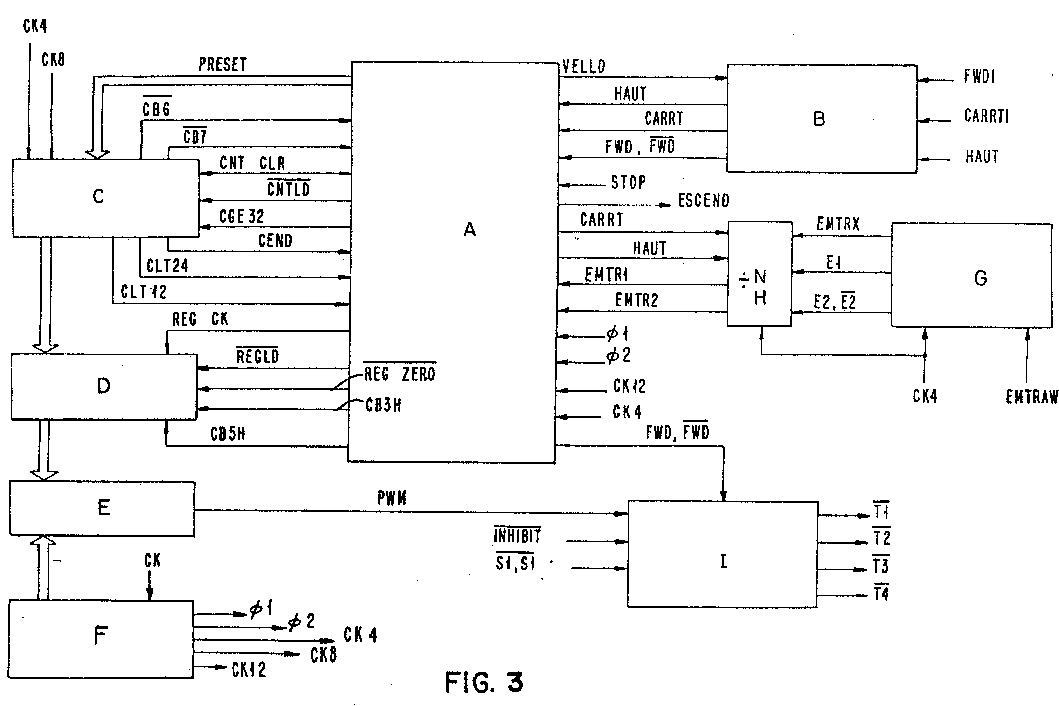

Selon les enseignements de la présente invention et en se reportant à la figure 3, le compteur C est préréglé à − $\Delta t_0$ et le comptage commence à la réception d'une impulsion de codage. La valeur de EM' (Δt − $\Delta t_0$) qui sera lue au compteur, est placée dans le registre D à la réception de l'impulsion de codage suivante. La fonction logique utilisée pour assurer la génération d'un signal de commande modulé par largeur d'impulsion à partir de la valeur EM' emmagasinée dans le registre D comprend un circuit de comparaison E du type « plus grand que » et un compteur non asservi F.

En supposant qu'un signal d'horloge de 1,25 MHz soit appliqué à l'entrée du compteur F et qu'une restauration à 0 soit réalisée approximativement toutes les 50 microsecondes (ce qui implique la génération d'un signal d'excitation de 19,53 KHz, c'est-à-dire 1,25 MHz divisé par CK6 (1,25 MHz/$2^6$ =

5

19,53 KHz), entraînant une restauration après 1/19,53 = 51,2 µsec., le compteur peut compter par exemple de 0 à 63, puis revenir à 0. A titre d'exemple, si la valeur emmagasinée de EM' est de 8, la valeur emmagasinée de EM est « supérieure » aux 8 comptes du total de 64 comptes du compteur non asservi. Le coefficient d'utilisation du signal « supérieur à » est donc de 1 divisé par 8. Bien que la période du signal soit toujours fixe (1 divisé par 2 000 dans le cas présent), le cycle d'utilisation est proportionnel à la valeur de EM. Ceci permet une sortie du type PWM à partir d'une fonction logique simple sans utiliser aucun circuit analogique.

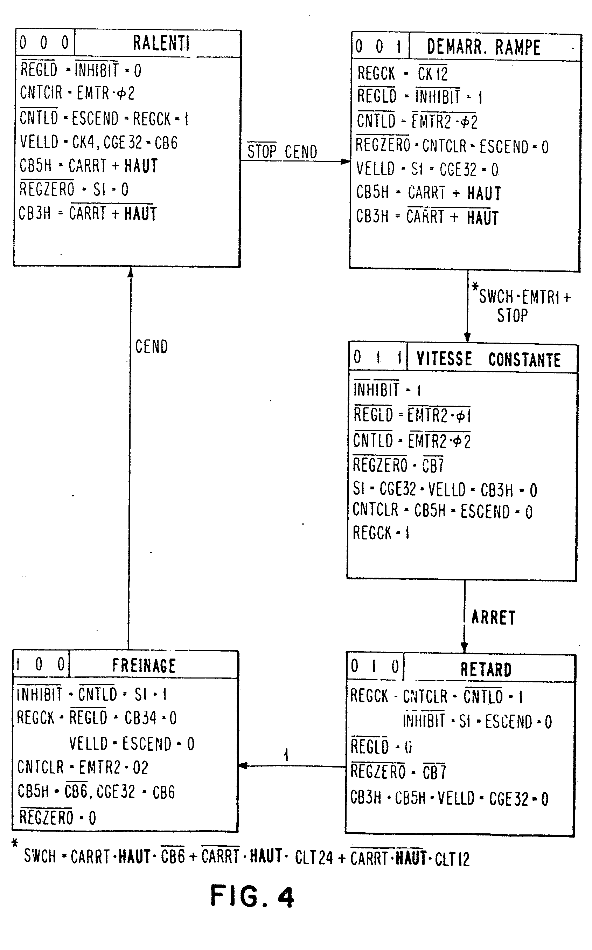

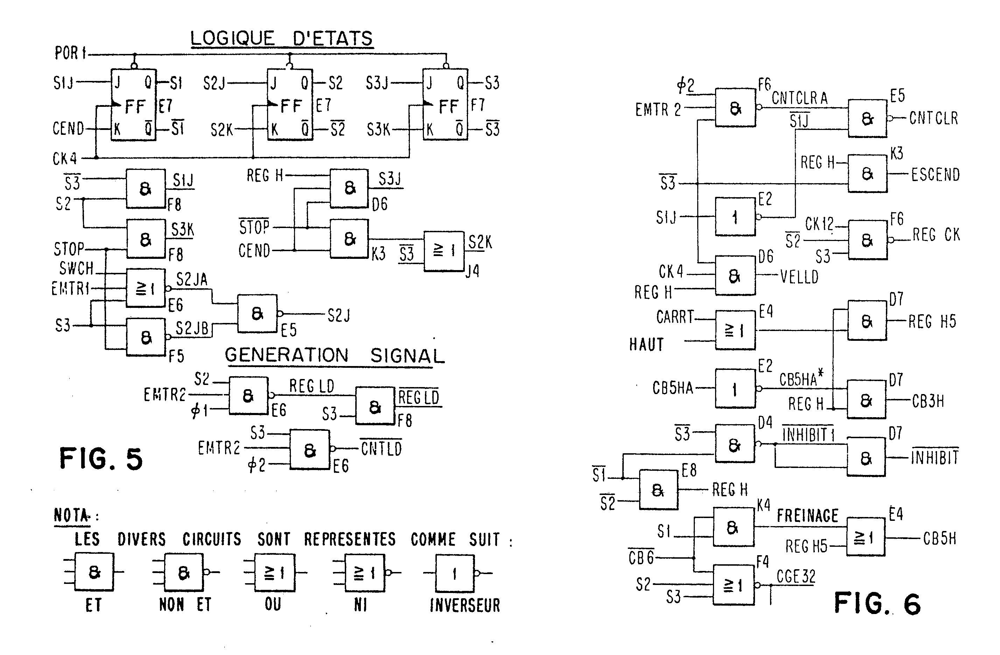

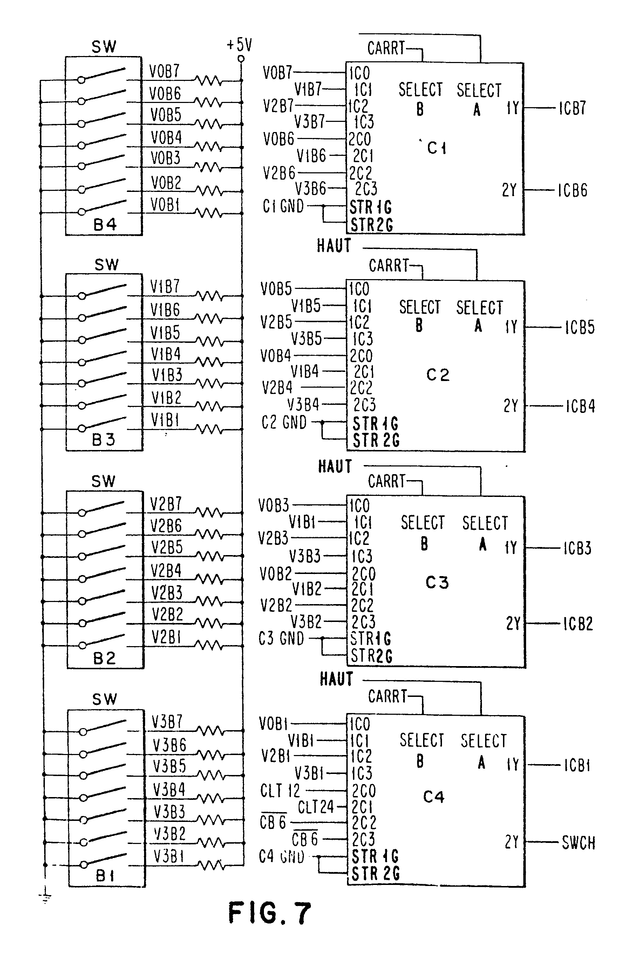

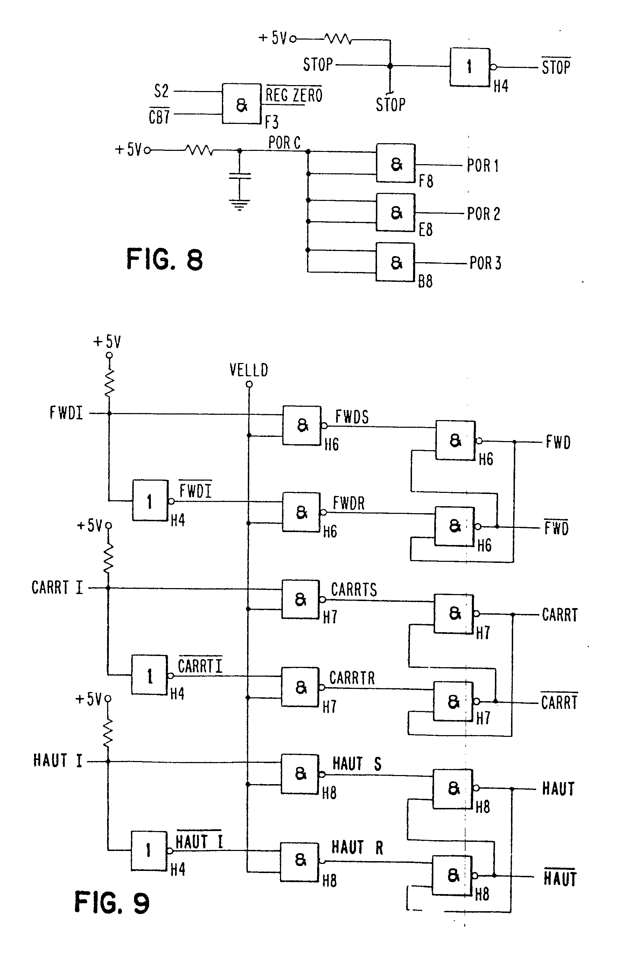

Le système de commande faisant partie du système de commande de vitesse numérique non linéaire approché et les circuits utilisés dans celui-ci, sont représentés aux figures 3 et suivantes. Étant donné que les diagrammes sont complets, une indication mnémonique est utilisée pour les divers signaux d'entrée et de sortie à chacun des blocs logiques de la figure 3. Par exemple, le diagramme des états de l'unité de commande de séquences A de la figure 3 est donné à la figure 4 tandis que les figures 5 à 8 représentent la logique comprise dans l'unité de commande de séquence. D'une manière similaire, la bascule d'entrée d'échappement B, le compteur C, le registre D, le comparateur E, le compteur F, l'interface d'unité de codage G, le compteur H de division par N et l'interface de l'unité d'excitation I qui conduit à l'unité électronique d'excitation 40 (Fig. 1), sont représentés en série dans les autres dessins commençant par la figure 9. Vu que chacun des blocs fonctionnels représentés à la figure 3 présente à la fois des entrées et des sorties à désignation mnémonique, on donnera par la suite un glossaire de ces indications mnémoniques, beaucoup de ces entrées et sorties étant indiquées relativement à chacun des blocs fonctionnels A à I de façon que chacun desdits blocs puisse être examiné individuellement en ce qui concerne ses entrées et ses sorties. Par exemple, l'unité de commande de séquence A reçoit une entrée CARRT de la bascule d'échappement B et envoie une sortie VELLD à la bascule B.

Ainsi, pour l'unité de commande de séquence A, CARRT indique une entrée tandis que VELLD indique une sortie. Cependant, pour la bascule d'entrée d'échappement B, VELLD indique une entrée tandis que CARRT indique une sortie. De cette manière, le glossaire peut être utilisé non seulement pour indiquer la condition des signaux d'entrée et de sortie mais les blocs fonctionnels A à I peut être examiné indépendamment et collectivement. De plus, en consultant le glossaire et les circuits représentés, on voit que suivant l'entrée d'échappement appliqué à la bascule d'entrée d'échappement, le signal est établi pour trois vitesses approximatives du chariot, la vitesse I ($V_0$) d'approximativement 12 cm/sec., la vitesse II ($V_1$) d'approximativement 25 cm/sec. et la vitesse III d'approximativement 53 cm/sec. En outre, certaines définitions sont plus complètes en ce qui concerne certains des blocs logiques, en particulier lorsque leur signification doit être explicitée pour la compréhension du lecteur. A ce sujet on se reportera par exemple aux définitions mnémoniques CEND, CLT 24, CLT 12 du glossaire de définition des entrées de l'unité de commande de séquence A et aux mêmes définitions mnémoniques du glossaire de définition des sorties du compteur C.

## Glossaire mnémonique

### Unité de commande de séquence (A)

Entrées

1. FWD, FWD : Sorties de la bascule de direction
2. CARRT, HAUT : Sorties de la bascule de vitesse (V0, V1) (chariot vers la droite)
3. STOP : Début d'échappement, Arrêt
4. CEND : Signal de décodage du compteur C
5. CLT 24 : Décodage commutateur compteur C pour vitesse II (VI = 25 cm/sec.)
6. CLT 12 : Décodage commutateur compteur C pour vitesse I (V0 = 12 cm/sec.)
7. $\overline{CB6}$ : Décodage commutateur compteur C pour vitesse III (53 cm/sec.) et décodage des valeurs inférieures à 32
8. $\overline{CB7}$ : Sortie niveau bas lorsque le compteur C est inférieur à 0
9. CK4 : Horloge système
10. 01 : Première phase de l'horloge système
11. 02 : Deuxième phase de l'horloge système
12. CK12 : Impulsion de début de rampe
13. EMTR 1 : Signal de codage
14. EMTR 2 : 2ème signal de codage.

Sorties

1. ESCEND : Indication de fin d'échappement
* 2. CARRT, HAUT : Sélection « Division par » pour la logique de codage
3. FWD, $\overline{FWD}$ : Fonctionnement vers l'avant et dans le sens inverse (gauche à droite, droite gauche)

# 0 010 199

4. INHIBIT : au niveau bas, coupure de tous les transistors de l'unité d'excitation 40

5. SI, SI : Indication du mode arrêt

6. REG.CK : Incrémentation registre D

7. REG.LD : Au niveau bas, chargement registre

8. REG.ZERO : Au niveau bas, passage contenu registre D à zéro

9. CB3H : Établissement charge registre à 4

10. CB5H : Établissement charge registre à 16

* 11. PRESET : Valeur pré-établie dans le compteur C (7 bits, ICB1---ICB7)

12. CNTCLR : Vide le compteur C

13. CNTLD : Au niveau bas, chargement compteur C

14. CGE 32 : Modification incrément temps du compteur C

15. VELLD : Emmagasinage par la bascule (B) de la fonction d'échappement suivante.

* PRESET :

| CARRT, HAUT | | $\div$ N | NBRE PREREGL. |
|---|---|---|---|
| 00 | | 1 | − 42 (12 cm/sec.) |
| 01 | | 2 | − 40 (25 cm/sec.) |
| 11 | | 4 | − 28 (53 cm/sec.) |

Bascule d'entrée d'échappement : (B)

Entrées

1. FWD I : Sens

1 : vers l'avant (gauche à droite)

0 : vers l'arrière (droite à gauche)

2. CARRT I, HAUT I : Données vitesse (VO, V1)

00 : 12 cm/sec.

01 : 25 cm/sec.

11 : 53 cm/sec.

10 : invalide

3. VELLD :

1 : Emmagasinage FWD I, CARRT I et HAUT I dans la bascule d'entrée

0 : Maintien des valeurs emmagasinées.

Sorties

1. FWD, $\overline{FWD}$ : Sortie de la bascule de sens

2. CARRT, HAUT : Sortie de la bascule de vitesse.

Compteur : (C)

Entrées

1. PRESET : Entrée de 7 bits représentant − $\Delta t_0$ avec le système de numérotation suivant (ICB1, ICB2 ... ICB7)

| Entrée Hexadécimale | Valeur du compteur |
|---|---|
| 3 F | + 63 |
| 00 | 0 |
| 7 F | − 1 |
| 40 | − 64 |

2. CNTCLR : Vide le compteur C

3. CNTLD : Au niveau bas, chargement du compteur C avec les valeurs PRESET

4. CGE 32 : Commutation horloge à une vitesse plus lente lorsque le contenu du compteur est supérieur à 32 et que le système de commande est dans le mode arrêt.

5. CK4 : Horloge système

6. CK8 : Autre impulsion d'horloge (plus lente)

7

Sorties

1. $\overline{CB7}$ : Sortie niveau bas lorsque le contenu du compteur est supérieur à 0.

2. $\overline{CB6}$ : (Décodage 1) est au niveau haut lorsque le contenu du compteur C est inférieur à 32. En « mode arrêt », valeur = $t_{on}$, par exemple 0,4096 m sec. ($32 \times 12,8$ μsec.). Egalement utilisé pour la vitesse V2.

3. CEND : (Décodage 2), au niveau haut lorsque la valeur du compteur C bascule égale à 3 $F_{16}$. En « mode arrêt », valeur = $t_{final}$ : 6,96 m sec. (on notera qu'en « mode arrêt », une horloge plus lente (CK8) est utilisée lorsque la valeur du compteur est comprise entre 32 et 63).

4. CLT 24 : Au niveau haut lorsque la valeur du compteur C est inférieure à 24 (utilisée pour la vitesse VI).

5. CLT 12 : Au niveau haut lorsque la valeur du compteur C est inférieure à 12 (ceci signifie que la période s'écoulant entre les impulsions d'émetteur est inférieure à la valeur pré-établi + 12 multipliée par 12,8 μ) sec). Utilisé pour la vitesse $V_0$.

6. Signaux valeur compteur : Valeurs (CB1 ... CB7) dans compteur C.

Registre : (D)

Entrées

1. Signaux valeur compteur : Valeurs (CB1 ... CB7) dans compteur C ;

2. $\overline{REGLD}$ : Au niveau bas, chargement dans le registre D d'une valeur.

3. REGCK : Incrémentation registre par signal horloge c'est-à-dire une fois toutes les 3,28 m sec.

4. $\overline{REG.ZERO}$ : Valeur chargée dans registre D établie au niveau bas à moins que CB3H ou CB5H ne soit au niveau haut.

5. CB3H : Lorsque REG.ZERO est haut, valeur chargée dans registre = 4. Utilisé avec début rampe pour la vitesse $V_0$.

6. CB5H : Lorsque REG.ZERO est haut, valeur chargée dans registre : 16. Utilisé avec début rampe pour les vitesses $V_1$ et $V_2$.

Sorties

1. REGISTER VALUE : Registre 1 ... Registre 6, tension sortie (REG1 ... REG6).

Comparateur : (E)

Entrées

1. Valeur REGISTRE D : Sortie tension (REG.1 ... REG.6) du registre D

2. Valeur COMPTEUR F : (CK1 ... CK6) compteur non asservi ou d'horloge.

Sorties

1. PWM : Dans le présent exemple, il s'agit d'un signal modulé par largeur d'impulsion de 19,53 KHz dont le cycle d'utilisation est proportionnel à la valeur contenue dans le REGISTRE D.

Compteur : (F)

Entrées

1. CK : Dans l'exemple donné, il s'agit d'un signal d'horloge de 1,25 MHz.

Sorties

1. Signaux d'horloge COMPTEUR F : Sortie (CK1, CK2 ... CK12, 01, 02) d'un compteur non asservi à 12 bits. Les signaux CK1 à CK6 sont utilisées pour la génération des signaux PWM. Les signaux CK4 et CK8 sont les signaux d'horloge du compteur C. Le signal CK4 est un signal d'horloge système pour l'unité de commande de séquence. Le signal CK12 est utilisé pour incrémenter le REGISTRE D en début de rampe. La fréquence des signaux d'horloge référencés CK est de 1,25 MHz CKN, c'est-à-dire que la fréquence du signal d'horloge CK4 est égale à $1,25/2^4$ ; soit à 78,125 KHz.

Interface de l'unité de codage : (G)

Entrées

8

# 0 010 199

1. EMTRAW/signal d'Entrée issu de l'unité de codage du moteur.
2. CK4 : Horloge système.

Sorties

1. EMTRX : Généré comme fonction de EMTRAW pour permettre à la logique ÷ N d'assurer la division, c'est-à-dire fonctionne comme un signal de mise en séquence pour ÷ N
2. EI : Une impulsion dont la largeur est égale à deux impulsions d'horloge avant chaque signal EMTRAW.
3. E2, E2 : Impulsion permettant la séparation de l'impulsion E1 en impulsions de phases différentes.

Division par N : (H)

Entrées

1. EMTRX : Mise en séquence de la logique de division.
2. E1 : Utilisé pour générer EMTR1 et EMTR2.
3. E2, E2 : Séparation de EMTR1 et EMTR2.
4. CARRT, HAUT : Signal qui provoque la division par N, définie par

| CARRT, HAUT | N |
|---|---|
| 00 | 1 |
| 01 | 2 |
| 11 | 4 |

Sorties

1. EMTR1 : Première Partie du bord avant du signal de codage ; utilisé pour tester la commutation « début rampe » à « commande vitesse ».
2. EMTR2 : Deuxième partie du bord avant du signal de codage ; utilisé pour générer la séquence compteur C et REGLD.

Interface de l'unité d'excitation : (I)

Entrées

1. FWD, $\overline{FWD}$ : Fonctionnement AV et AR du moteur.
2. $\overline{INHIBIT}$ : Au niveau bas, tous les transistors de commande de l'unité d'excitation sont coupés.
3. S1, $\overline{S1}$ : Mode arrêt.
4. PWM : Cycle d'utilisation pour la commutation de l'unité d'excitation à 19,53 KHz.

Sorties

1. $\overline{T1}$, $\overline{T2}$, $\overline{T3}$, $\overline{T4}$ : Quatre signaux de commande de transistor pour l'unité d'excitation.

Bien que la génération et la fonction de chacun des signaux et leur utilisation dans le système de commande 20 ne présentent pas d'ambiguïtés et apparaissent comme évidents d'après la figure 3 et les suivantes, on décrira cependant ci-dessous le fonctionnement du système de commande qui maintient l'entraînement du chariot à une vitesse pré-déterminée.

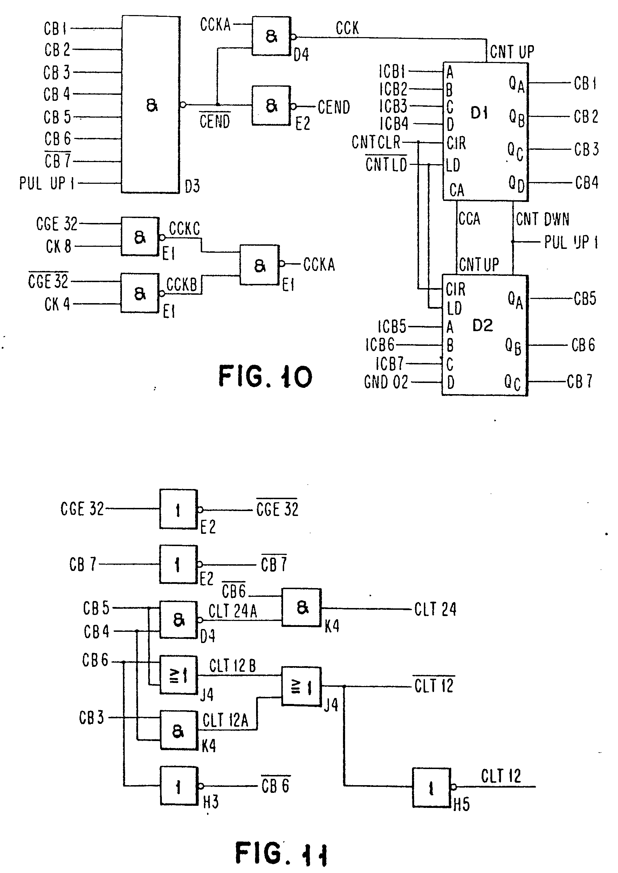

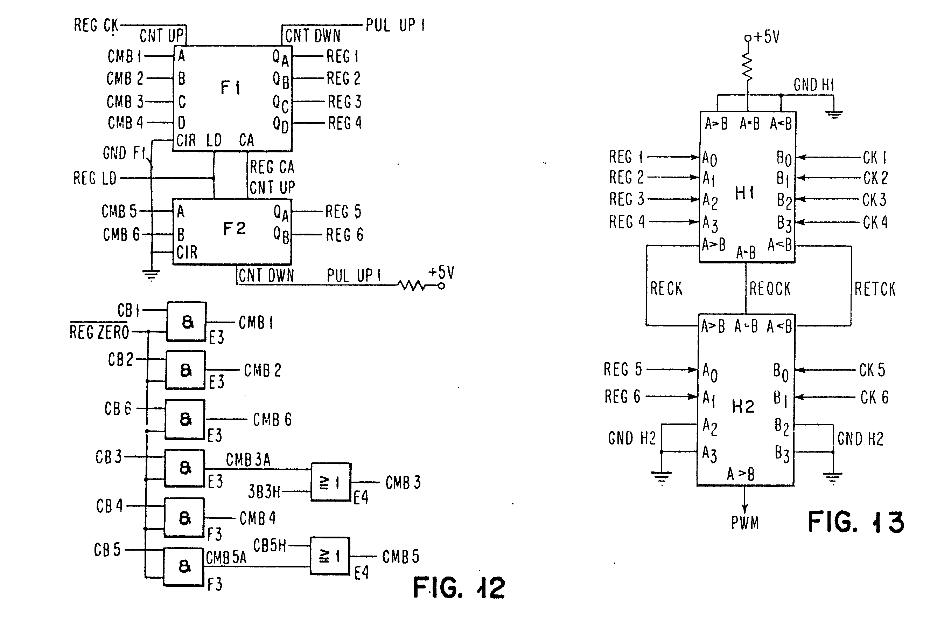

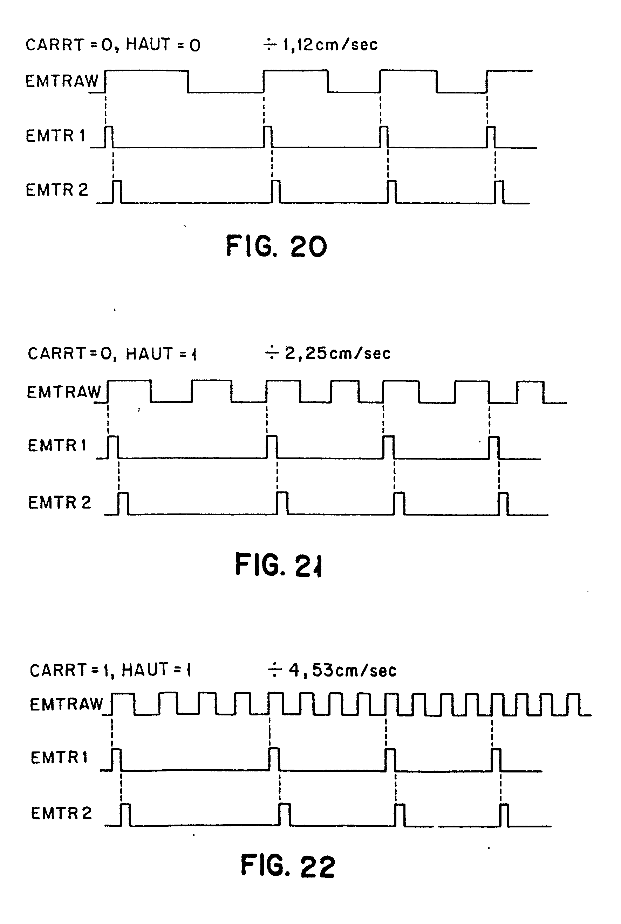

En supposant que le chariot est en mouvement et que la bascule d'entrée d'échappement B a reçu les signaux appropriés issus, d'un circuit de détection, que les données de vitesse ont été appliquées à la bascule d'entrée d'échappement pour déterminer la vitesse appropriée et qu'un signal EMTRAW émis par l'unité de codage 26 est reçu par l'interface d'unité de codage G, les signaux d'entrée d'échappement sont également utilisés pour conditionner la logique H de division par N et, suivant l'ajustement de la vitesse, pour fournir des impulsions de codage à partir de EMTR1 et EMTR2, pratiquement comme représenté dans les figures 20 à 22. Pour la discussion, on suppose que l'horloge système CK est établi à 1,25 MHz, ce qui, par l'intermédiaire du compteur F, permet la génération des impulsions d'horloge nécessaires à la commande de l'unité de commande de séquence A, du comportement E, du compteur G, de l'interface d'unité de codage G et de que H de division par N. Lorsque l'unité de commande de séquence A reçoit les impulsions de codage, elle génère les signaux appropriés comme on le voit aux figures 3, 4 et 5 à 8 et comme décrits dans le glossaire mnémonique, pour le préconditionnement du compteur C avec l'information $\Delta t_0$ appropriée par l'intermédiaire, par exemple, du signal PRESET et met le compteur en route par le signal CNTLD. Le registre D est donc chargé avec la valeur de $\Delta t - \Delta t_0$ (EM') à la réception du signal REGLD. Les figures 10 et 11 ainsi que la figure 12 représentent respectivement les circuits utilisés dans le compteur C et le registre D tandis que le glossaire mnémonique définit les divers signaux d'entrée à la fois comme entrées et comme sorties du compteur et du registre.

Le comparateur E peut être considéré comme un circuit de comparaison du type « plus grand que » et, comme on le voit dans la figure 13, reçoit des entrées issues du registre D, indiquant la différence entre $\Delta t$ et $\Delta t_0$. Comme on le voit également dans la figure 13, les comparateurs de grandeur H1 et H2 reçoivent les signaux d'entrée d'horloge CK1 à CK6 issus du compteur F.

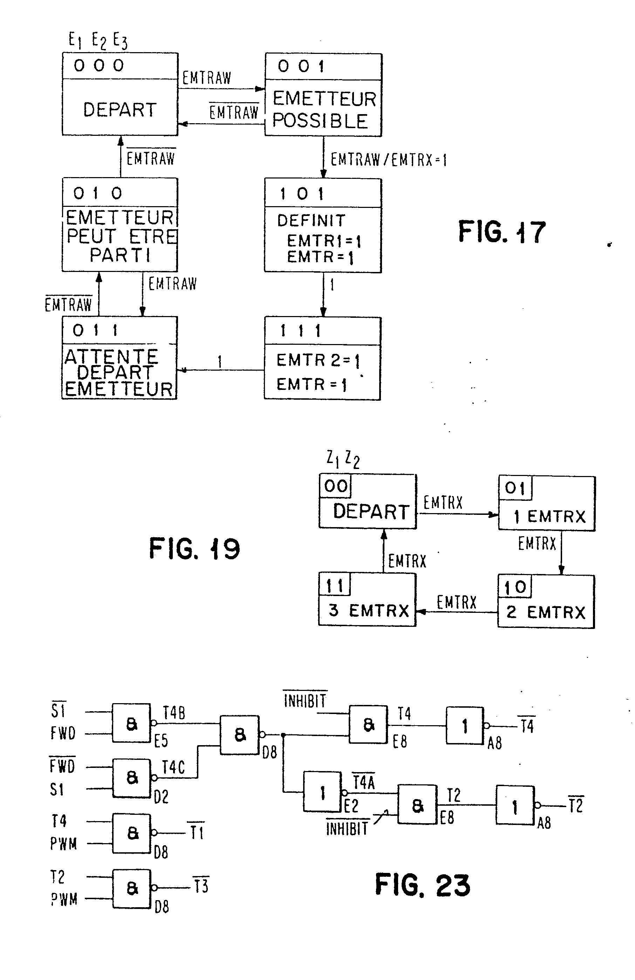

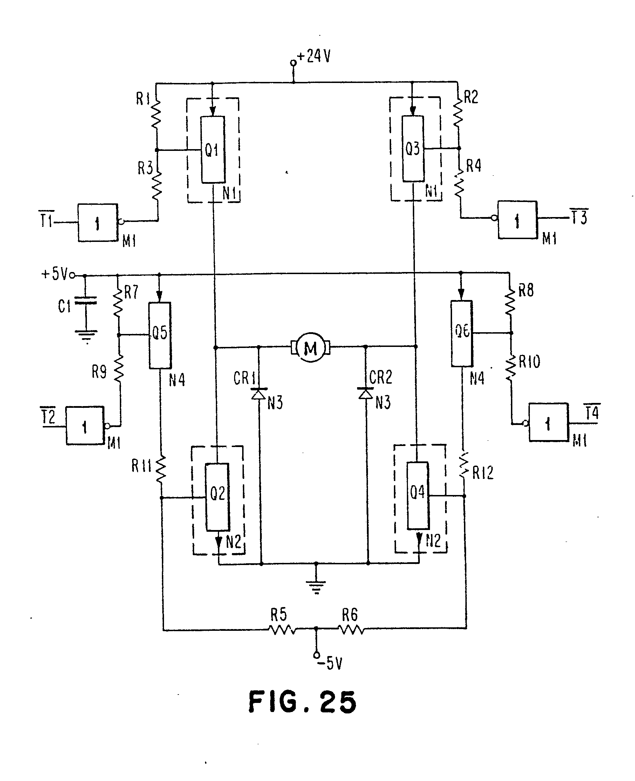

Naturellement, $\Delta t - \Delta t_0$ est proportionnel à la valeur de EM'. Dans un comparateur du type « plus grand que » ou dans des comparateurs de grandeurs, dans le cas où la valeur reçue du registre est élevée pour une certaine partie des comptes reçus du compteur F, la tension de sortie est modulée selon ce rapport. Par exemple, en supposant que la valeur du registre D soit de 32 et que le comparateur aie reçu un compte de 64, les comparateurs de grandeurs permettront alors un cycle de travail de 32 divisé par 64 et le signal PWM ressemblera à un signal carré dans lequel la tension est haute pendant la moitié d'un cycle et basse pendant l'autre moitié. Naturellement, plus grand est le cycle de travail, plus importante sera l'énergie appliquée au moteur 25 et, naturellement, plus rapide sera sa rotation. Le signal PWM issu du comparateur E est appliqué à l'interface de circuit d'excitation I qui reçoit également des entrées composées de signaux issus de l'unité de commande de séquence A comme indiqué dans le glossaire mnémonique, pour générer par l'intermédiaire des circuits logiques représentés à la figure 23, des signaux d'excitation destinés au système électronique d'excitation 40 représenté à la figure 25.

Le système électronique d'excitation 40 du moteur 25 est de préférence du type à commutation de puissance et est représenté à la figure 25. La commande en H fonctionne en mode unipolaire limité, les circuits d'entrées négatifs MI recevant les signaux d'excitation T1-T4 issus de l'interface de circuit d'excitation commande I. En mode d'excitation pour obtenir une tension appliquée au moteur positive, on commute le transistor QI, à 19,53 KHz tandis que le transistor Q4 est passant. Les transistors Q2 et Q3 sont bloqués. La diode CR1 fonctionne comme une diode collectrice lorsque le transistor QI est bloqué. Pour obtenir une tension moteur négative, le transistor Q3 est commuté à 19,53 KHz tandis que les transistors Q2, Q1 et Q4 sont bloqués. En raison de la conception des circuits, il y a un retard de 20 microsecondes pendant le changement de sens de la tension lorsque tous les transistors sont bloqués. Les jonctions inhérentes aux transistors Darlington Q1 et Q3 sont utilisés dans ce cas comme des diodes collectrices pendant la période de transition. Les transistors Q5 et Q6 sont utilisés pour assurer une tension de coupure de − 5 volts aux transistors Q2 et Q4.

On notera qu'il existe d'autres modes de fonctionnement possibles, certains d'entre eux étant décrits dans l'article de Jacob Tal intitulé : « Design and Analys is of Pulse Width Modulated Amplifiers for DC Servo Systems », paru dans les « IEEE Transactions On Industrial Electronics and Control Instrumentation », Février 1976. De plus, le moteur 25 qui peut être de n'importe quel type classique, peut être un moteur à courant continu équipé d'aimants M-6, de paliers à billes et d'un enroulement de 24 volts.

## Mode démarrage

Après que la dernière fonction d'échappement ait été achevée, une nouvelle fonction d'échappement peut être appliquée au système de commande, par exemple par une entrée d'échappement appliquée à la bascule d'entrée d'échappement B. En mode démarrage, une tension en rampe est générée au haut d'une tension en escalier initiale afin d'amener le moteur à tourner à une vitesse prédéterminée et de lui permettre de fonctionner de la manière décrite jusqu'à présent. Une tension en rampe au haut d'une tension en escalier initiale est utilisée en raison du fait que la cadence des impulsions de codage (cadence d'échantillonnage) est initialement trop faible aux basses vitesses pour l'obtention d'une information de vitesse précise. A cet égard, lorsque le moteur arrive au voisinage de la vitesse désirée, le système de commande passe en mode de commande de vitesse non linéaire approchée comme décrit ci-dessus pour le contrôle de la vitesse d'impression. Dans les systèmes décrits ici comme indiqué à la fois dans les dessins et dans le glossaire mnémonique, la tension en rampe présente une incrémentation de 0,375 volts toutes les 3,28 msec. La tension en escalier initiale est de 1,5 volts pour la vitesse de 12 cm/sec. et de 6 volts pour les vitesses V1 et V2 de 25 et 53 cm/sec., respectivement. Comme indiqué précédemment, en mode démarrage, le système fonctionne en boucle ouverte, le démarrage en escalier et rampe étant choisi en raison de sa simplicité et parce qu'il garantit l'obtention de la vitesse désirée avec une stabilité relative maximum interdisant toute oscillation de la vitesse du moteur de part et d'autre de la vitesse désirée.

Pendant le démarrage du moteur, sa vitesse est contrôlée par la détermination du temps s'écoulant entre des impulsions de codage consécutives. Lorsque le moteur atteint une vitesse proche de la vitesse désirée, le système de commande passe dans le mode de commande de vitesse non linéaire approchée décrit précédemment. Par exemple, la commutation se produit aux vitesses suivantes : à la vitesse approximative de 12 cm/sec., la commutation se produit à 11,074 cm/sec. (92 %) ; à 25 cm/sec., la commutation se produit à 20,78 cm/sec. (83 %) ; et à 53 cm/sec., la commutation se produit à 44,45 cm/sec. (84 %).

Le mode démarrage en rampe peut être facilement visualisé d'après le glossaire mnémonique ainsi que d'après les figures 11 et 10 en ce qui concerne la génération des signaux nécessaires à l'incrémentation effective du compteur et de la tension jusqu'au point de commutation prédéterminé. Par exemple, le signal de sortie CLT 12 du compteur sera au niveau haut lorsque la valeur du compteur C sera inférieure à 12.

Ceci signifie que le temps s'écoulant entre les impulsions d'émetteur est inférieur à la valeur pré-établie qui, dans le cas de la vitesse $V_0$, est de 48 plus 12 en raison de la valeur du compteur. Cette condition persistera pendant $(48 + 12) \times 12,8$ µsec., après quoi se déroulera la commutation. La même chose est vraie en ce qui concerne CLT 24, pour la vitesse V1 et CB6, pour la vitesse $V_2$. De plus, en ce qui concerne le registre D, le signal CB3H est utilisé comme entrée pour le chargement de ce registre avec un démarrage en rampe lorsque la vitesse est de $V_0$ tandis que CB5H est utilisé avec un démarrage en rampe lorsque la vitesse est de $V_1$ et $V_2$.

Ainsi, en mode démarrage, la fonction d'échappement est amorcée par l'application d'une tension en rampe au haut d'une tension en escalier jusqu'à ce que le moteur atteigne une vitesse proche de la vitesse désirée auquel moment le système de commande est commuté en mode de commande de vitesse non-linéaire approchée décrit précédemment.

## Mode de Commande Freinage

Le mode de commande freinage a deux fonctions principales : (1) l'application d'une tension de freinage qui est proportionnelle à la vitesse du moteur et (2), la détection de la décélération du moteur. Afin de générer la tension de freinage, une impulsion fixe de tension de freinage est appliquée après la réception de chaque impulsion de codage. Mathématiquement, la tension moyenne appliquée au moteur est donnée par l'équation suivante : (1) : $EM = - (t_{appl.}/\Delta t) E_{freinage}$, où EM est la tension moteur, $t_{appl.}$ est le temps d'application de la tension pendant $\Delta t$ qui est le temps s'écoulant entre les impulsions de codage. Soit : $V = \Delta x/\Delta t$ où V est la vitesse moteur, $\Delta x$ est la distance séparant les impulsions de codage. On a donc : $EM = - (t_{appl.}) (E_{freinage}/\Delta x)V$. Comme on peut le voir, la forme de l'équation donnée ci-dessus est similaire à celle de l'équation de la fonction du système de commande du type analogique 0 donnée jusqu'à maintenant. Cette fonction est donnée par l'expression suivante : $EM = - K(V - V_0)$ où V est la vitesse du moteur, $V_0$ est la vitesse désirée, K est une constante. En établissant $V_0 = 0$, on a : $EM = - K(V)$. Ainsi le gain effectif du système numérique est le suivant : $K = (t_{appl.}) (E_{freinage}/\Delta x)$.

Ceci n'est vrai que pendant la période de temps où la cadence d'échantillonnage est suffisamment élevée pour permettre l'établissement d'une moyenne correcte par le système. Aux cadences d'échantillonnage plus faibles, c'est-à-dire lorsque l'unité de codage ralentit, la réponse variera. Il est donc préférable de détecter la faible vitesse à laquelle le procédé de freinage peut être interrompu où, en d'autres termes, de détecter l'instant où la vitesse désirée est atteinte.

En se reportant à la Figure 3 et au glossaire mnémonique, on voit que la détection de l'instant où la vitesse pré-déterminée désirée est atteinte, est assurée par le signal CEND (décodage 2). Comme indiqué dans le glossaire mnémonique, le signal CEND ou décodage 2 passe au niveau haut lorsque le temps compté excède $t_{final}$. Ainsi, lorsque la vitesse moteur devient inférieure à $V_{final} = \Delta x/t_{final}$, la fonction de freinage n'est plus assurée.

Cette fonction est mise en œuvre en restaurant le compteur C chaque fois qu'une impulsion de codage est reçue. Une fois encore, on voit d'après la figure 3 et les suivantes ainsi que d'après le glossaire mnémonique que le signal CB6 (décodage 1) est au niveau haut lorsque le temps compté est inférieur à $t_{appl.}$. Le signal CEND ou décodage 2 est, d'autre part, au niveau haut lorsque le temps compté excède $t_{final}$. Ainsi, le registre D est chargé avec la tension de freinage. Ces signaux, en association avec l'unité de commande de séquence A et l'interface de l'unité d'excitation I génèrent la tension à appliquer au moteur pour obtenir le freinage. Le temps $t_{appl.}$ utilisé est de 0,409 6 msec. et la tension de freinage est de − 6 volts. Le gain effectif utilisé pour le freinage est maintenu à une valeur faible aux vitesses les plus hautes pour éviter les courants de freinage importants. Le temps $t_{final}$ est de 6,96 msec. et en conséquence, les décélérations sont de 1,22 cm/sec. à la vitesse de 12 cm/sec., de 2,4 cm/sec. à 25 cm/sec. et de 4,8 cm/sec. à 53 cm/sec. Ainsi, le gain effectif utilisé pour le freinage est de 70 mv/rad.sec.$^{-1}$ à 12 cm/sec., de 35 mv/rad.sec.$^{-1}$ à 25 cm/sec. de 17 mv/rad.sec. à 53 cm/sec.

En résumé, le compteur C et le registre D tirent leur importance du fait que lors de l'initiation d'une impulsion de codage, le compteur compte et effectue une comparaison avec une valeur pré-établie, ce qui donne une différence qui est proportionnelle à la tension appliquée ou qui devrait être appliquée au moteur pour lui permettre de fonctionner à sa vitesse prédéterminée tandis que lors de l'initiation de l'impulsion suivante (c'est-à-dire l'impulsion suivante issue de l'unité de codage), le registre D est chargé avec cette différence et devient disponible en tant que sortie proportionnelle à la tension de commande nécessaire pour que le moteur atteigne sa vitesse correcte. À cet égard, la sortie du registre D peut être mise en relation directe avec un convertisseur tension/fréquence dont la fréquence de sortie est directement proportionnelle à la tension d'entrée de façon à augmenter ou à diminuer selon le cas, la vitesse de rotation d'un moteur à courant alternatif, par exemple. Cependant, la commande directe, d'une manière décrite jusqu'à maintenant, est préférable avec un entraînement à moteur à courant continu dans lequel un signal PWM est dérivé de la différence de tension pour la commande par l'intermédiaire d'un circuit approprié, de la vitesse de rotation du moteur.

# 0 010 199

## Revendications

1. Système de commande de la vitesse pour imprimante comportant un chariot (11) sur lequel sont disposés des éléments (12) permettant l'impression de caractères sur un milieu (17) de réception d'impression et assurant un mouvement relatif entre ledit chariot et ledit milieu de réception d'impression,

un moteur à courant continu (25) couplé soit audit chariot, soit audit milieu de réception d'impression, soit aux deux pour assurer ledit mouvement relatif,

un moyen (27, 28) générant une série d'impulsions adjacentes séparées par un intervalle de temps inversement proportionnel à la vitesse dudit mouvement relatif, système caractérisé en ce qu'il comprend

un moyen comparant l'intervalle ($\Delta t$) de temps entre impulsions adjacentes à un intervalle de temps prédéterminé ($\Delta t_0$) fonction de la vitesse désirée et générant un premier signal de sortie numérique représentant la différence ($\Delta t - \Delta t_0$) entre l'intervalle de temps réel entre impulsions adjacentes et ledit intervalle de temps prédéterminé,

et un moyen de génération à partir du premier signal de sortie numérique, d'une tension qui est proportionelle audit premier signal et qui est appliquée audit moteur pour obtenir la vitesse désirée du mouvement relatif.

2. Système de commande pour imprimante selon la revendication 1 caractérisé en ce que le moyen de génération de tension comporte :

un moyen (E) de comparaison recevant ledit premier signal de sortie numérique et le comparant à une deuxième valeur fournie par un compteur non asservie (F) et générant une impulsion de sortie (PWM) dont la largeur est proportionnelle audit premier signal de sortie numérique, et

3. Système de commande pour imprimante selon l'une des revendications 1 ou 2 caractérisé en ce que ledit moteur comporte un arbre moteur et une roue de codage (26) couplée audit arbre moteur pour l'émission d'une série d'impulsions adjacentes séparées par un intervalle de temps inversement proportionnel à la vitesse de rotation dudit moteur.

4. Système de commande pour imprimante selon l'une des revendications 1 à 3 caractérisé en ce qu'il comprend un moyen modifiant ledit intervalle de temps prédéterminé afin d'augmenter ou de diminuer la vitesse dudit moteur.

5. Système de commande pour imprimante selon l'une des revendications 1 à 4 caractérisé en ce qu'il comprend un moyen d'emmagasinage (D) dudit premier signal numérique, un compteur (F) non asservi comptant des impulsions d'horloge et contenant la deuxième valeur numérique et un comparateur (E) générant l'impulsion de sortie quand ledit premier signal de sortie numérique est plus grand que la deuxième valeur numérique.

6. Système de commande pour imprimante selon l'une des revendications 1 à 4 caractérisé en ce qu'il comprend un moyen d'application d'une tension de démarrage en rampe au moteur à courant continu jusqu'à ce que ledit moteur atteigne une vitesse de rotation correspondant à un pourcentage prédéterminé de sa vitesse finale, et un moyen de contrôle de ladite vitesse jusqu'à ce que ledit pourcentage soit atteint.

7. Système de commande selon l'une des revendications précédentes caractérisé en ce qu'il est mis en œuvre dans une imprimante à jet d'encre comprenant un chariot et un moteur à courant continu connecté audit chariot pour entraîner celui-ci sur une trajectoire prédéterminée, un moyen disposé adjacent à ladite trajectoire pour maintenir ledit milieu de réception d'impression en position, une buse (13) émettant un courant perturbé de gouttelettes d'encre dirigées vers ledit milieu de réception d'impression, une électrode de charge (14) desdites gouttelettes d'encre et des électrodes de déviation (15) desdites gouttelettes d'encre suivant la charge qu'elles portent, lesdites buses, électrodes de charge et électrodes de déviation étant montées sur ledit chariot.

8. Système de commande selon l'une des revendications 1 à 6 caractérisé en ce qu'il est mis en œuvre dans une imprimante à balayage continu.

## Claims

1. A speed control system for a printer comprising : a carrier (11) provided with elements (12) for printing characters on a print medium (17) and for effecting a relative motion between said carrier and said print medium,

a DC motor (25) connected to either of said carrier and said print medium or to both to effect said relative motion,

means (27, 28) for generating a series of adjacent pulses separated by a time interval inversely proportional to the speed of said relative motion, characterized in that it includes :

means for comparing the time interval ($\Delta t$) between adjacent pulses with a predetermined time interval ($\Delta t_0$), that is a function of the desired speed, and for generating a first digital output signal representing the difference ($\Delta t - \Delta t_0$) between the actual time interval between adjacent pulses and said predetermined time interval, and

12

means for generating from the first digital output signal a voltage proportional to said first signal, that is applied to said motor to obtain the desired speed of the relative motion.

2. A control system for a printer according to claim 1, characterized in that the voltage generation means comprises :

comparison means (E) for receiving said first digital output signal and comparing it with a second digital value supplied by a free running counter (F), and then generating an output pulse (PWM) whose width is proportional to said first digital output signal.

3. A control system for a printer according to claim 1 or 2, characterized in that said motor comprises a motor shaft and an encoder wheel (26) coupled to said motor shaft to issue a series of adjacent pulses separated by a time interval that is inversely proportional to the rotation speed of said motor.

4. A control system for a printer according to any one of claims 1 to 3, characterized in that it comprises means for modifying said predetermined time interval to increase or decrease the speed of said motor.

5. A control system for a printer according to any one of claims 1 to 4, characterized in that it comprises means (D) for storing said first digital signal, a free running counter (F) counting the clock pulses and containing the second digital value, and a comparator (E) generating the output pulse when said first digital output signal is greater than the second digital value.

6. A control system for a printer according to any one of claims 1 to 4, characterized in that it comprises means for applying a ramp start DC motor voltage until said motor reaches a rotation speed corresponding to a predetermined percentage of its final speed, and means for controlling said speed until said percentage has been reached.

7. A control system according to any one of the preceding claims, characterized in that it is implemented in an ink jet printer comprising a carrier and a DC motor connected to said carrier to drive the latter along a predetermined path, means adjacent to said path to maintain said print medium in its position, a nozzle (13) emitting a disturbed stream of ink droplets directed towards said print medium, a charge electrode (14) for said ink droplets and deflection electrodes (15) for said ink droplets depending on the charge they carry, said nozzle, charge electrode and deflection electrodes being mounted on said carrier.

8. A control system according to any one of claims 1 to 6, characterized in that it is implemented in a continuously scanning printer.

**Ansprüche**

1. Steuersystem zur Schrittschaltung eines Druckers mit : einem Wagen (11), auf welchem Elemente (12) angeordnet sind, die zum Drucken von Zeichen auf einer Druckunterlage (17) bestimmt sind und eine Relativbewegung zwischen dem Wagen und der Druckunterlage sicherstellen,

einem Gleichstrom-Motor (25), der mit dem Wagen, der Druckunterlage, oder mit beiden verbunden ist, um die Relativbewegung zu gewährleisten,

Mitteln (27, 28) zum Erzeugen einer Reihe benachbarter Impulse, die durch ein Zeitintervall getrennt sind, das der Geschwindigkeit der Relativbewegung umgekehrt proportional ist, dadurch gekennzeichnet, dass es einschliesst :

Mittel zum Vergleichen des Zeitintervalls ($\Delta t$) zwischen angrenzenden Impulsen mit einem vorbestimmten Zeitintervall ($\Delta t_0$), das eine Funktion der gewünschten Geschwindigkeit ist, und zum Erzeugen eines ersten numerischen Ausgangssignals, das die Differenz ($\Delta t - \Delta t_0$) zwischen dem tatsächlichen Zeitintervall zwischen benachbarten Impulsen und dem vorbestimmten Zeitintervall darstellt,

Mittel zum Erzeugen aus dem ersten numerischen Ausgangssignal einer dem ersten Signal proportionalen Spannung, die an den Motor angelegt wird, um die gewünschte Geschwindigkeit der ersten Relativbewegung zu erhalten.

2. Steuersystem eines Druckers nach Anspruch 1, dadurch gekennzeichnet, dass die Mittel zur Spannungserzeugung einschliessen :

Vergleichsmittel (E), die das erste numerische Ausgangssignal erhalten und es mit einem zweiten, von einem nicht servo-gesteuerten Zähler (F) gelieferten Wert vergleichen, und einen Ausgangsimpuls (PWM) erzeugen, dessen Breite mit dem ersten numerischen Ausgangssignal proportional ist.

3. Steuersystem nach Anspruch 1 oder 2, dadurch gekennzeichnet, dass der Motor eine Motorewelle und ein mit der Welle verbundenes Codierrad (26) zum Erzeugen einer Reihe von anliegenden Impulsen einschliesst, die durch ein der Rotationsgeschwindigkeit des Motors umgekehrt proportionales Zeitintervall getrennt sind.

4. Steuersystem nach einem der Ansprüche 1 bis 3, dadurch gekennzeichnet, dass es Mittel zum Aendern des vorbestimmten Zeitintervalls einschliesst, um die Geschwindigkeit des Motors zu erhöhen oder zu vermindern.

5. Steuersystem nach einem der Ansprüche 1 bis 4, dadurch gekennzeichnet, dass es einschliesst : Speichermittel (D) zum Speichern des ersten numerischen Signals, einen nicht servogesteuerten Zaehler (F), der die Taktimpulse zaehlt, und den zweiten numerischen Wert enthält, sowie einen Vergleicher (E), der den Ausgangsimpuls erzeugt, wenn das erste numerische Ausgangssignal grüsser ist als der zweite numerische Wert.

6. Steuersystem nach einem der Ansprüche 1 bis 4, dadurch gekennzeichnet, dass es einschliesst : ein Mittel zum Anlegen einer Anlasserspannung in Form einer Rampe an den Gleichstrom-Motor, bis der Motor eine Rotationsgeschwindigkeit erreicht, die einem vorbestimmten Prozentsatz seiner endgültigen Geschwindigkeit entspricht, und ein Mittel zum Steuern der Geschwindigkeit, bis dieser Prozentsatz erreicht ist.

7. Steuersystem nach einem der vorhergehenden Ansprüche, dadurch gekennzeichnet, dass es in einem Tintenspritzdrucker ausgeführt wird, der einschliesst : einen Wagen und einen an diesen Wagen angeschlossenen Gleichstrom-Motor, um ihn entlang einer vorbestimmten Bahn zu führen, Mittel, die an dieser Bahn anliegen, um die Druckunterlage in Stellung zu halten, eine Düse (13) zur Ausgabe eines gestörten, auf die Druckunterlage gerichteten Tröpfchenstromes, eine Ladeelektrode (14) zum Laden dieser Tintentroepfchen, Umleiteelektroden (15) für diese Tintentröpfchen je nach der von ihnen getragenen Ladung, wobei die Düse, die Ladeelektrode und die Umleiteelektroden auf dem Wagen angeordnet sind.

8. Steuersystem nach einem der Ansprüche 1 bis 6, dadurch gekennzeichnet, dass es in einem Drucker mit kontinuierlicher Abtastung ausgeführt ist.

SIGNAL CODAGE

SIGNAUX PWM

ENTREE
ECHAPPEMENT

TENSION
MOTEUR

**FIG. 1**

$\dfrac{V_0}{V} - 1$

$1 - \dfrac{V}{V_0}$

0,3

0,2

0,1

0,80 $V_0$    0,90 $V_0$    1,05 $V_0$    1,15 $V_0$    1,25 $V_0$

0,75 $V_0$    0,85 $V_0$    0,95 $V_0$    1,10 $V_0$    1,20 $V_0$

-0,1

-0,2

-0,3

**FIG. 2**

FIG. 3

0 010 199

| 0 0 0 | RALENTI |
|---|---|

REGLD · INHIBIT · 0
CNTCIR · EMTR · φ2
CNTLD · ESCEND · REGCK · 1
VELLD · CK4, CGE32 · CB6
CB5H · CARRT + HAUT
REGZERO · SI · 0
CB3H · CARRT + HAUT

STOP CEND →

| 0 0 1 | DEMARR. RAMPE |
|---|---|

REGCK · CK 12
REGLD · INHIBIT · 1
CNTLD · EMTR2 · φ2
REGZERO · CNTCLR · ESCEND · 0
VELLD · SI · CGE32 · 0
CB5H · CARRT + HAUT
CB3H · CARRT + HAUT

*SWCH·EMTR1 + STOP

| 0 1 1 | VITESSE CONSTANTE |
|---|---|

INHIBIT · 1
REGLD · EMTR2 · φ1
CNTLD · EMTR2 · φ2
REGZERO · CB7
SI · CGE32 · VELLD · CB3H · 0
CNTCLR · CB5H · ESCEND · 0
REGCK · 1

ARRET

| 0 1 0 | RETARD |
|---|---|

REGCK · CNTCLR · CNTLD · 1
INHIBIT · SI · ESCEND · 0
REGLD · 0
REGZERO · CB7
CB3H · CB5H · VELLD · CGE32 · 0

1 →

| 1 0 0 | FREINAGE |
|---|---|

INHIBIT · CNTLD · SI · 1
REGCK · REGLD · CB34 · 0
VELLD · ESCEND · 0
CNTCLR · EMTR2 · 02
CB5H · CB6, CGE32 · CB6
REGZERO · 0

CEND

* SWCH · CARRT·HAUT·CB6 + CARRT·HAUT·CLT24 + CARRT·HAUT·CLT12

FIG. 4

## LOGIQUE D'ETATS

## GENERATION SIGNAL

**FIG. 5**

NOTA :

LES DIVERS CIRCUITS SONT REPRESENTES COMME SUIT :

| ET | NON ET | OU | NI | INVERSEUR |

**FIG. 6**

0 010 199

FIG. 7

FIG. 8

FIG. 9

FIG. 10

FIG. 11

0010 199

8

REG CK —— CNT UP          CNT DWN —— PUL UP 1

CMB 1 —— A          $Q_A$ —— REG 1
CMB 2 —— B    F 1   $Q_B$ —— REG 2
CMB 3 —— C          $Q_C$ —— REG 3
CMB 4 —— D          $Q_D$ —— REG 4
         CIR  LD  CA

GND F1
REG LD ——————          REG CA
                       CNT UP

CMB 5 —— A          $Q_A$ —— REG 5
CMB 6 —— B    F 2   $Q_B$ —— REG 6
         CIR

         CNT DWN —— PUL UP 1 —— +5V

CB 1 ——
REG ZERO —— & E3 —— CMB 1

CB 2 —— & E3 —— CMB 2

CB 6 —— & E3 —— CMB 6

CB 3 —— & E3 CMB 3A
3B3H —— ≥ 1 E4 —— CMB 3

CB 4 —— & F3 —— CMB 4

CB 5 —— & F3 CMB 5A   CB5H —— ≥ 1 E4 —— CMB 5

**FIG. 12**

+5V

GND H1

A>B  A=B  A<B

REG 1 —— $A_0$          $B_0$ —— CK 1
REG 2 —— $A_1$   H 1    $B_1$ —— CK 2
REG 3 —— $A_2$          $B_2$ —— CK 3
REG 4 —— $A_3$          $B_3$ —— CK 4

A>B       A=B       A<B

RECK      REQCK      RETCK

A>B  A=B  A<B

REG 5 —— $A_0$          $B_0$ —— CK 5
REG 6 —— $A_1$   H 2    $B_1$ —— CK 6
GND H2 —— $A_2$          $B_2$ —— GND H2
         $A_3$          $B_3$

         A >B

         PWM

**FIG. 13**

FIG. 14

FIG. 15

FIG. 16

FIG. 18

CARRT = O, HAUT = O          ÷ 1,12 cm/sec

EMTRAW

EMTR 1

EMTR 2

## FIG. 20

CARRT = O, HAUT = 1          ÷ 2,25 cm/sec

EMTRAW

EMTR 1

EMTR 2

## FIG. 21

CARRT = 1, HAUT = 1          ÷ 4,53 cm/sec

EMTRAW

EMTR 1

EMTR 2

## FIG. 22

$E_1$ $E_2$ $E_3$

| 0 0 0 | 0 0 1 |
|---|---|
| DEPART | EMETTEUR POSSIBLE |

EMTRAW →

← $\overline{EMTRAW}$

$\overline{EMTRAW}$ ↑

EMTRAW/EMTRX=1

| 0 1 0 | 1 0 1 |
|---|---|
| EMETTEUR PEUT ETRE PARTI | DEFINIT EMTR1=1 EMTR=1 |

↓ EMTRAW

1

$\overline{EMTRAW}$

| 0 1 1 | 1 1 1 |
|---|---|
| ATTENTE DEPART EMETTEUR | EMTR 2=1 EMTR=1 |

← 1

**FIG. 17**

$Z_1$ $Z_2$

| 00 | 01 |
|---|---|
| DEPART | 1 EMTRX |

EMTRX →

EMTRX ↓

EMTRX ↑

| 11 | 10 |
|---|---|
| 3 EMTRX | 2 EMTRX |

← EMTRX

**FIG. 19**

**FIG. 23**

FIG. 24

**FIG. 25**